# EUROPEAN PATENT APPLICATION

(11) **EP 0 963 954 A2**
(43) Date of publication of application: **15.12.1999**
(21) Application number: 99201781.4
(22) Date of filing: 03.06.1999
(51) Int. Cl.: C02F 3/10, C02F 3/20, C02F 3/30

(54) **Method and an apparatus of membrane separation**

(30) Priority: 04.06.1998 JP 15597398
(71) Applicant: BIOTHANE SYSTEMS INTERNATIONAL B.V., NL-2623 EW Delft (NL)
(72) Inventor: Satou, Mikio, Sumitomo Heavy Industries, Ltd., Hiratsuka, Kanagawa (JP); Inoue, Isamu, Sumitomo Heavy Industries, Ltd., Hiratsuka, Kanagawa (JP)
(74) Representative: Ottevangers, Sietse Ulbe

(57) **Abstract**

In a method of membrane separation of filtrating water to be treated (2) by a membrane module (3) in a biological treatment tank (1) and alternately carrying out nitrification and denitrification treatments in the biological treatment tank (1), during the nitrification treatment, an oxygen including gas as an aeration gas for aerating the membrane module (3) is introduced into the water to be treated (2) and during the denitrification treatment, introduction of the oxygen including gas is stopped and an inner tank gas in the biological treatment (1) is used to circulate as the aeration gas of the membrane module (3). In this case, aeration of the membrane module is carried out both in the nitrification and denitrification treatments. Therefore, even in the denitrification treatment, filtration of the water to be treated by the membrane module is made possible and when the water amount of the water to be treated which is to be treated in the nitrification and the denitrification treatments is intended to be maintained constant, compared with a case in which the filtration is carried out only in the nitrification treatment, an area of a membrane of the membrane module (3) is reduced.

## Description

The present invention relates to a method and an apparatus of membrane separation, further particularly to a method and an apparatus of membrane separation for filtrating water to be treated by a filter module dipped in the water to be treated in a biological treatment tank and alternately carrying out nitrification and denitrification in the biological treatment tank.

In recent years, eutrophication of waters poses a problem and a technology of removing nitrogen which is a principal substance for a cause therefor is regarded important. The main stream of the technology of removing nitrogen is a biological nitrification and denitrification method. According to the nitrification and denitrification method, ammonia or the like in water is converted into nitrite ions and nitrate ions by nitrite bacteria, nitrate bacteria and so on (nitrification treatment) and the nitrite ions and the nitrate ions and so on are converted into nitrogen by denitrifier bacteria or the like (denitrification treatment).

There has been such a biological nitrification and denitrification method disclosed in, for example, JP-A-7-242596, according to the publication, as shown by Fig. 5, there is disclosed a method of membrane separation in which water to be treated 101 is filtrated through a membrane module 102 in a biological treatment tank 100 by a sucking pump 106 and nitrification and denitrification are alternately carried out. According to the method of membrane separation, in a membrane separation apparatus 105, during the nitrification treatment, the water to be treated 101 is filtrated by the membrane module 102, air is introduced into the water to be treated 101 by a blower 103 and cleaning of a membrane of the membrane module 102 is carried out by agitation of water flow by using an agitating pump 104. During the denitrification treatment, introduction of air is stopped and the agitation of water flow is carried out by the agitating pump 104 to successively carry out cleaning of the membrane. In this case, only by agitation of water flow, the cleaning effect of the membrane is not sufficient, clogging of the membrane may be caused and accordingly, in the denitrification treatment, filtration of the water to be treated 101 by the membrane module 102 is temporarily stopped.

However, according to the method of membrane separation disclosed in JP-A-7-242596 mentioned above, during the denitrification treatment, filtration of the water to be treated 101 by the membrane module 102 is temporarily stopped and therefore, a water treatment amount of the water to be treated 101 during the denitrification treatment becomes zero. Therefore, when a water amount of the water to be treated 101 which is to be treated in the nitrification treatment and the denitrification treatment is intended to maintain constant, the water amount of the water to be treated 101 which is to be treated during the nitrification treatment is obliged to increase, as a result, an area of the membrane of the membrane module 102 needs to increase. Accordingly, the membrane module 102 becomes large-sized and accordingly, the membrane separation apparatus 105 becomes large-sized.

Hence, in view of the above-described situation, it is an object of the invention to provide a method and an apparatus of membrane separation capable of realizing small-size formation of the apparatus of membrane separation.

In order to achieve the above-described object, a method of membrane separation according to the invention is featured in that in a method of membrane separation of filtrating water to be treated by a membrane module dipped in a biological treatment tank and alternately carrying out a nitrification treatment and a denitrification treatment in the biological treatment tank, during the nitrification treatment, an oxygen including gas as an aeration gas for aerating the membrane module is introduced into the water to be treated and during the denitrification treatment, introduction of the oxygen including gas is stopped and an inner tank gas remaining in the biological treatment tank is used to circulate as the aeration gas of the membrane module.

According to the method of membrane separation, aeration of the membrane module is carried out not only during the nitrification treatment but also the denitrification treatment. Accordingly, filtration of the water to be treated by the membrane module can be carried out also in the denitrification treatment. Therefore, when a water amount of the water to be treated which is to be treated in the nitrification treatment and the denitrification treatment is intended to maintain constant, compared with a case in which the filtration is carried out only during the nitrification treatment, the area of the membrane of the membrane module is reduced.

Further, an apparatus of membrane separation according to the invention is featured in that in an apparatus of membrane separation for filtrating water to be treated by a membrane module dipped in a biological treatment tank and alternately carrying out a nitrification treatment and a denitrification treatment in the biological treatment tank, said apparatus of membrane separation comprising an aeration gas line for delivering an oxygen including gas to a position below the membrane module, a first valve installed to the aeration gas line, an inner tank gas line one end of which is connected to an upper space of the biological treatment tank and other end of which is connected to a downstream side portion of the first valve of the aeration gas line, a second valve installed to the inner tank gas line and control means for alternately constituting an aerobic atmosphere and an anaerobic atmosphere in the biological treatment tank by detecting a dissolved oxygen concentration in the water to be treated or an oxygen concentration in an inner tank gas and controlling to open or close the first valve and second valve in accordance with the oxygen concentration.

The membrane separation apparatus is effective when the above-described membrane separation method is carried out. That is, the dissolved oxygen concentration in the water to be treated or the oxygen concentration in the tank is detected by the control means, the second valve is closed in accordance with the oxygen concentration, the first valve is opened and nitrification treatment is carried out under an aerobic atmosphere. That is, during the nitrification treatment, the oxygen including gas is introduced into the water to be treated via the aeration gas line as aeration gas of the membrane module. Further, the dissolved oxygen concentration in the water to be treated or the oxygen concentration in the inner tank gas is detected, the first valve is closed in accordance with the oxygen concentration to thereby stop introduction of the oxygen including gas and the second valve is opened to thereby carry out the denitrification treatment under an anaerobic atmosphere. During the denitrification treatment, the inner tank gas remaining in the biological treatment tank is used to circulate as the aeration gas of the membrane module via the inner tank gas line and the aeration gas line. In this way, the aeration of the membrane module is carried out not only in the nitrification treatment but also in the denitrification treatment and accordingly, filtration of the water to be treated by the membrane module can be carried out also in the denitrification treatment. Accordingly, when the water amount of the water to be treated which is to be treated in the nitrification treatment and the denitrification treatment is intended to maintain constant, compared with the case in which the filtration is carried out only in the nitrification treatment, the area of the membrane of the membrane module is reduced.

### [Mode for Carrying Out the Invention]

A detailed explanation will be given of preferable embodiments of an apparatus of membrane separation according to the invention in reference to the drawings as follows. Further, in all the drawings, same or corresponding constituent elements are attached with the same notations.

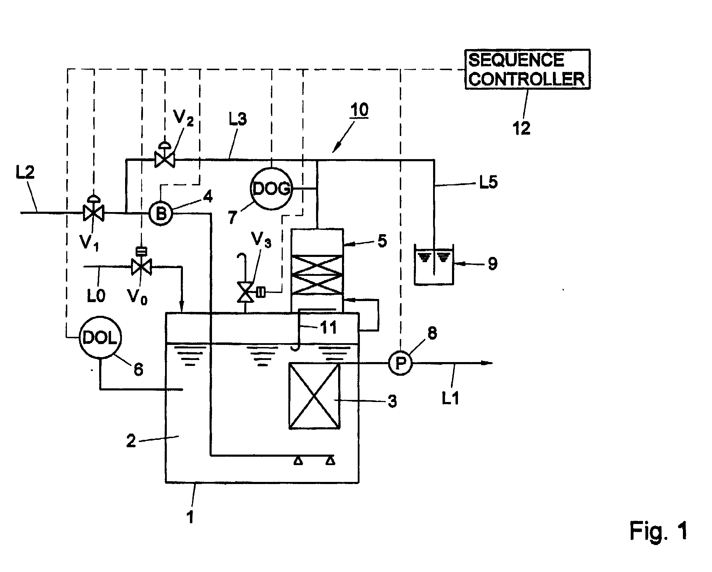

Fig. 1 is an outline sectional view showing a preferable embodiment of an apparatus of membrane separation according to the invention. As shown by Fig. 1, a membrane separating apparatus 10 is installed with a biological treatment tank 1. At an inner portion of the biological treatment tank 1, water to be treated 2 is contained and the water to be treated 2 includes activated sludge. Further, the biological treatment tank 1 is connected with a line L0 extended from a raw water source, not illustrated, and the line L0 is attached with a raw water introducing valve V₀ and connected. with a raw water pump, not illustrated. Therefore, raw water is introduced into the water to be treated 2 via the line L0. Further, in the water to be treated 2, a membrane module 3 is dipped. The membrane module 3 is installed with a plurality of flat membrane elements and a case for containing the respective flat membrane elements at inside thereof. As the flat membrane element, in accordance with a kind of the water to be treated 2, either of an UF membrane and an MF membrane can be used. Further, the membrane module 3 contained in the biological treatment tank 1 is not limited to a single one thereof but a plurality thereof may be provided.

Each of the flat membrane elements is arranged with a water collecting pipe (not illustrated) and water permeated through a membrane of the flat membrane element is collected to the water collecting pipe as treated water. The respective water collecting pipes are connected to a line L1 and the L1 is connected with a sucking pump 8. Therefore, negative pressure is caused in the flat membrane element by the sucking pump 8 and water to be treated is sucked.

Further, the biological treatment tank 1 is arranged with an aeration gas line L2, one end of the aeration gas line L2 is connected to an oxygen including gas source for containing an oxygen including gas (for example, air) and other end thereof penetrates an upper plate of the biological treatment tank 1 and is extended to a position below the membrane module 3 in the water to be treated 2. Further, the aeration gas line L2 is attached with an atmosphere inlet valve (first valve) V₁ and a downstream side thereof is attached with an agitating blower 4 for delivering aeration gas such as an oxygen including gas into the biological treatment tank 1.

Further, an upper portion of the biological treatment tank 1 is arranged with a mist separator 5 for removing water from a gas generated from the water to be treated 2 and a tube 11 for returning the separated water back to the water to be treated 2 is hung from the mist separator 5. Further, the biological treatment tank 1 is arranged with an inner tank gas line L3, one end thereof is connected to an upper space of the biological treatment tank 1 via the mist separator 5 and other end thereof is connected to an intermediary portion between the atmosphere inlet valve V₁ of the aeration gas line L2 and the agitating blower 4. The inner tank gas line L3 is attached with a circulation gas valve (second valve) V₂.

Further, the inner tank gas line L3 is branched with a line L5 communicating with the line L3 and a front end thereof is dipped in water of a seal pot 9. The seal pot 9 is installed for adjusting inner pressure of the biological treatment tank 1 by discharging extra gas in the biological treatment tank 1.

Further, the inner tank gas line L3 is arranged with an oxygen concentration meter 7 for measuring an oxygen concentration in gas (hereinafter, referred to as "DOG") and the biological treatment tank 1 is arranged with a dissolved oxygen concentration meter 6 for measuring a dissolved oxygen concentration in the water to be treated 2 (hereinafter, referred to as "DOL"). Further, an upper portion of the biological treatment tank 1 is attached with a discharge valve V₃. Further, the membrane separation apparatus 10 is installed with a sequence controller 12 and the sequence controller 12 controls the raw water pump, the raw water introducing valve V₀, the sucking pump 8, the agitating blower 4, the atmosphere inlet valve V₁, the circulation gas valve V₂ and the discharge valve V₃ in accordance with the oxygen concentration of the inner tank gas detected by the oxygen concentration meter 7. Further, control means is constituted by the controller 12, the dissolved oxygen concentration meter 6 and the oxygen concentration meter 7.

Next, an explanation will be given of operation of the membrane separation apparatus 10 having the above-described constitution in reference to Fig. 2 through Fig. 4. Fig. 2 is a flowchart showing an example of a method of membrane separation according to the invention, Fig. 3 is an operation diagram of the sequence controller 12 and Fig. 4 is a graph showing an example of a time-sequential change of the oxygen concentration in the nitrification treatment and the denitrification treatment.

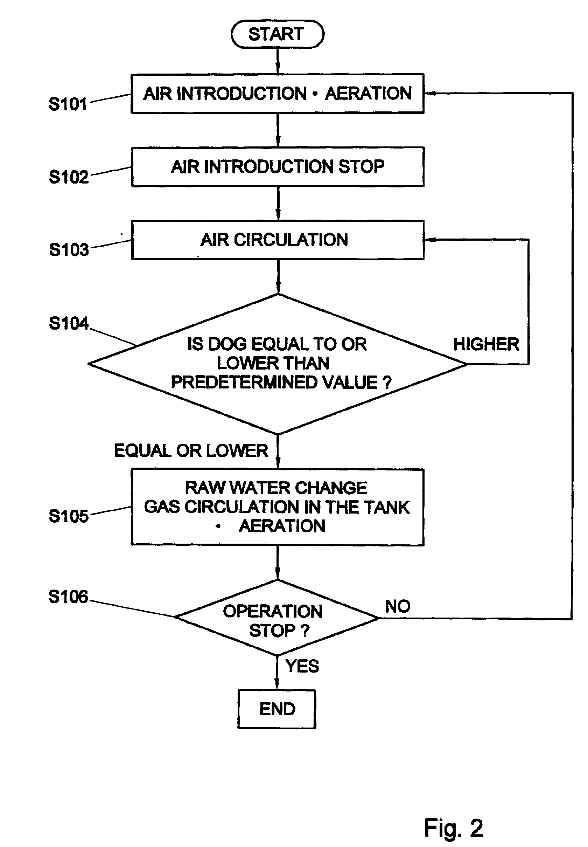

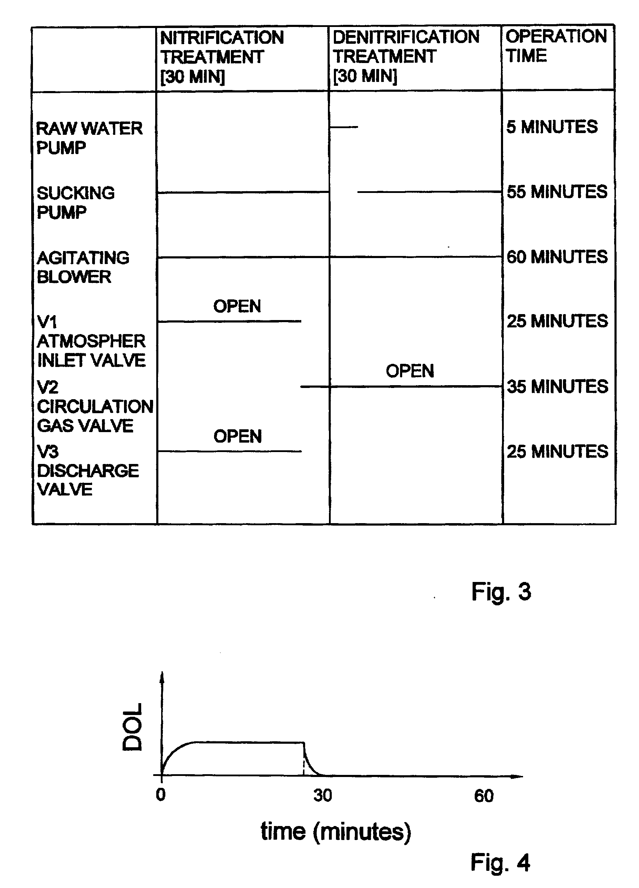

First, by operating the sucking pump 8, the water to be treated 2 is filtrated through the membrane of the membrane module 3 (refer to Fig. 3). Further, while carrying out the filtration of the water to be treated 2, firstly, the nitrification treatment of the water to be treated 2 is carried out. In the nitrification treatment, by the sequence controller 12, the circulation gas valve V₂ and the discharge valve V₃ are opened, the atmosphere inlet valve V₁ is opened and the agitating blower 4 is operated (refer to Fig. 3). As a result, as shown by Fig. 2, the oxygen including gas is introduced from the other end of the aeration gas line L1 and air is introduced as the aeration gas from the one end of the aeration gas line L1 into the water to be treated 2 and the aeration of the membrane module 3 by air is carried out (S101).

At this occasion, an aerobic atmosphere is formed in the biological treatment tank 1, in the aerobic atmosphere, nitrogen components of ammonia and so on in the water to be treated 2 are oxidized by the operation of nitrite bacteria, nitrate bacteria and so on to produce nitrous acid, nitric acid and so on.

In the meantime, the nitrification treatment is influenced by DOL and when DOL is small, the nitrification reaction is retarded and when DOL is high, the reaction is progressed. However, when the DOL becomes equal to or larger than a constant value, the reaction rate reaches a steady state. Hence, in the water to be treated 2, DOL is controlled to be a constant value. In this case, at an initial stage of the reaction, the discharge valve V₃ is also opened until DOL reaches the constant value, when DOL exceeds the constant value, the discharge valve V₃ is closed and the circulation gas valve V₂ is opened and by adjusting opening degrees of the atmosphere inlet valve V₁ and the circulation gas valve V₂, DOL is made to recover to the constant value. Further, although the constant value differs depending on a kind or an amount of the raw water charged into the water to be treated 2, the constant value is, for example, 3 mg/L.

Further, at a post stage of the nitrification treatment, there is carried out a preparatory treatment of the denitrification treatment which is a treatment successive to the nitrification treatment. In the preparatory treatment, prior to the denitrification treatment, DOL and DOG are previously reduced. The reason for carrying out the operation is as follows. That is, when DOL and DOG are large in the denitrification treatment, carbon sources in the water to be treated 2 are consumed by the nitrite bacteria, the nitrate bacteria and so on, the reaction by the denitrifier bacteria capable of converting nitric acid, nitrous acid and so on into nitrogen gas is not carried out sufficiently and the denitrification treatment is not carried out sufficiently. Therefore, there causes a need of increasing an amount of adding the carbon sources to be added to the water to be treated 2 in the denitrification treatment.

In the preparatory treatment, an operation which differs depending on the magnitude of DOG is carried out. That is, as shown by Fig. 2, when DOG is equal to or lower than 5 % at a time point at which the denitrification treatment is prepared (S104), firstly, introduction of air is stopped by closing the atmosphere inlet valve V₁ and the discharge valve V₃ by the sequence controller 12 (S102). Further, the circulation gas valve V₂ is left to be open (refer to Fig. 3).

As a result, the inner tank gas remaining in the biological treatment tank 1 is separated into the gas and liquid by passing through the mist separator 5, made to pass the inner tank gas line L2, delivered to the aeration gas line L1, made to pass the aeration gas line L1 as the aeration gas and introduced into the water to be treated 2 from the one end of the aeration gas line L1 to thereby carry out aeration of the membrane module 3. By repeating the steps, as shown by Fig. 2, the inner tank gas is used to circulate as the aeration gas of the inner tank gas (S103).

At this occasion, in the inner tank gas, during a time period in which the inner tank gas is used to circulate, oxygen in the inner tank gas is consumed by self respiration of activated sludge in the water to be treated 2, as a result, both DOL and DOG are reduced to almost zero (refer to Fig. 4). Accordingly, in the successive denitrification treatment, the reaction is sufficiently caused by the denitrifier bacteria and the denitrification treatment is sufficiently carried out. Therefore, there is no need of adding to the water to be treated 2 carbon sources necessary for denitrification treatment more than necessary in the denitrification treatment.

Further, when DOG exceeds 5 % at a time point at which the denitrification treatment is prepared, a balance between an oxygen capacity consumed by self respiration of activated sludge in the water to be treated 2 and a carbon dioxide gas capacity produced by the respiration is destroyed, with decreases in DOG and DOL, the inner portion of the biological treatment tank 1 are under a negative pressure, the atmosphere is sucked at close to a time point of finishing the preparatory treatment, as a result, there is a possibility of taking a time period in lowering DOL in the biological treatment tank 1.

Hence, when DOG exceeds 5 %, by the sequence controller 12, the atmosphere inlet valve V₁ is closed, the circulation gas valve V₂ and the discharge valve V₃ are opened and under the state, the inner tank gas is used to circulate the aeration gas of the membrane module 3. Further, at a time point at which DOG becomes equal to or lower than 5 %, the discharge valve V₃ is closed and the inner tank gas is used to circulate as the aeration gas of the membrane module 3.

In this way, when DOL or DOG are reduced and an anaerobic atmosphere is formed at inside of the biological treatment tank 1, the denitrification treatment is carried out. In this case, as shown by Fig. 2, by the sequence controller 12, at an initial stage of the denitrification treatment, raw water is charged by operating the raw water introducing valve V₀ and the raw water pump (refer to S105, Fig. 3). When there are few carbon sources in the raw water (normally, when an'amount of organic carbon source is less than an amount of the concentration of flowed-in nitrogen multiplied by 2.5), methanol or the like is charged as an organic carbon source. In this case, in the anaerobic atmosphere, nitrous acid, nitric acid and the like are deoxidized into nitrogen gas by the operation of the denitrifier bacteria in the raw water which needs the organic carbon source.

Further, when raw water is charged into the biological treatment tank 1, in view of maintaining constant water quality of treated water, it is preferable to stop sucking the water to be treated 2 by the membrane module 3 during a time period of charging raw water. In this case, the membrane module 3 is aerated by the inner tank gas and the membrane of the membrane module is cleaned. Cleaning of the membrane in this case is carried out for, for example, about 3 through 5 minutes.

After charging raw water, by the sequence controller 12, the atmosphere inlet valve V₁ and the discharge valve V₃ are closed and only the circulation gas valve V₂ is left to be opened (refer to Fig. 3). As a result, the inner tank gas remaining in the biological treatment tank 1 is separated into gas and liquid by passing through the mist separator 5, made to pass the inner tank gas line L3, delivered to the aeration gas line L2, made to pass the aeration gas line L2 as the aeration gas, and introduced into the water to be treated 2 from the front end of the aeration gas line L2 to thereby carry out aeration of the membrane module 3. At this occasion, DOG of the inner tank gas becomes previously and substantially zero prior to the denitrification treatment and the gas is composed of N₂ and CO₂ generated in the denitrification treatment. Accordingly, aeration of the membrane module 3 is carried out under the anaerobic condition. Therefore, extra gas in the biological treatment tank 1 is discharged from the seal pot 9. Thereafter, when the membrane separation apparatus 10 is successively operated, as shown by Fig. 2, the nitrification treatment and the denitrification treatment are repeatedly carried out successively (S106).

In this way, not only in the nitrification treatment but also in the denitrification treatment, aeration of the membrane module 3 is carried out and cleaning of the membrane of the membrane module 3 is sufficiently carried out also in the denitrification treatment. Therefore, the filtration of the water to be treated 2 can be carried out also in the denitrification treatment. Accordingly, when the water amount of the water to be treated 2 which is to be treated in the nitrification treatment and the denitrification treatment is intended to maintain constant, compared with the case in which the filtration is carried out only in the nitrification treatment, the treatment water amount of the water to be treated 2 in the nitrification treatment can be reduced. Accordingly, the area of the membrane necessary in the membrane module 3 can be reduced and accordingly, small size formation of the membrane separation apparatus 10 can be realized.

Further, the invention is not limited to the embodiment mentioned above. For example, as the oxygen including gas introduced into the water to be treated 2 in the nitrification treatment is not limited to air but oxygen can also be used.

Further, raw water maybe charged intermittently in the denitrification treatment and may be charged during the nitrification treatment. When raw water is charged in the denitrification treatment, filtration of the water to be treated 2 is stopped and the inner tank gas is successively introduced into the water to be treated 2. When raw water is charged in the nitrification treatment, filtration of the water to be treated 2 is stopped and the oxygen including gas is successively introduced into the water to be treated 2.

Further, although the raw water pump, the raw water introducing valve V₀, the sucking pump 8, the agitating blower 4, the atmosphere inlet valve V₁, the circulation gas valve V₂ and the discharge valve V₃ are controlled by the sequence controller 12 in accordance with the oxygen concentration in the inner tank gas detected by the oxygen concentration meter 7, these may be controlled in accordance with the dissolved oxygen concentration detected by the dissolved oxygen concentration meter 6.

As described above, according to the method and the apparatus of membrane separation of the invention, not only in the nitrification treatment but also in the denitrification treatment, aeration of the membrane module is carried out and accordingly, even in the denitrification treatment, filtration of the water to be treated by the membrane module can be carried out. Accordingly, when the water amount of the water to be treated which is to be treated in the nitrification treatment and the denitrification treatment is intended to maintain constant, compared with the case in which the filtration is carried out only in the nitrification treatment, the area of the membrane in the membrane module can be reduced and accordingly, the membrane separation apparatus can be downsized.

The method and the apparatus of membrane separation according to the invention is applicable to various uses, for example, biological treatment of industrial waste water, biological treatment of CP (community plant, housing complex waste water treating facility), effluent water treatment, biological treatment of rural households waste water and small scale sewage and other biological treatment including denitrification treatment of organic waste water and so on.

### [Brief Description of the Drawings]

Fig. 1 is an outline sectional view showing an embodiment of an apparatus of membrane separation according to the invention.

Fig. 2 is a flowchart showing an example of a method of membrane separation according to the invention.

Fig. 3 is an operation diagram of a sequence controller used in the invention.

Fig. 4 is a graph showing an example of a time-sequential change in an oxygen concentration in a nitrification treatment and a denitrification treatment.

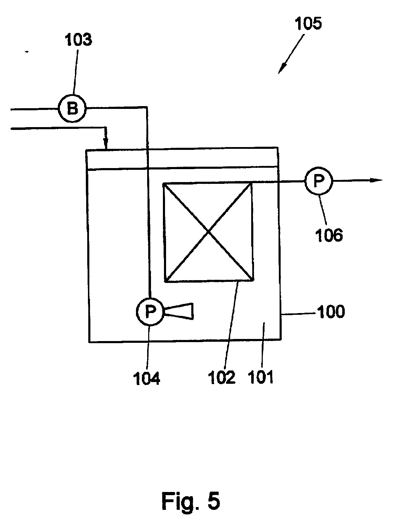

Fig. 5 is an outline sectional view showing an conventional membrane separation apparatus.

### Designation of the Reference Numerals and Signs

1 ...Biological treatment tank, 2...Water to be treated, 3 ...Membrane module, 6... Dissolved oxygen concentration meter (control means), 7...Oxygen concentration meter (control means), 12...Sequence controller, L2...Aeration gas line, L3...Inner tank gas line, V₁..Atmosphere inlet valve (first valve), V₂...Circulation gas valve (second valve).

## Claims

1. A method of membrane separation characterized in that in a method of membrane separation of filtrating water to be treated by a membrane module arranged in a biological treatment tank and alternately carrying out a nitrification treatment and a denitrification treatment in the biological treatment tank:
wherein during the nitrification treatment, an oxygen including gas is introduced into the water to be treated and the membrane module is aerated by the oxygen including gas and during the denitrification treatment, introduction of the oxygen including gas is stopped and an inner tank gas remaining in the biological treatment tank is used to circulate as the aeration gas of the membrane module.

2. The method of membrane separation according to Claim 1, characterized in that at a post stage of the nitrification treatment, introduction of the oxygen including gas is stopped and the inner tank gas remaining in the biological treatment tank is used to circulate as the aeration gas whereby a dissolved oxygen concentration in the water to be treated or an oxygen concentration in the inner tank gas is adjusted to be equal to or smaller than a constant value.

3. The method of membrane separation according to Claim 1 or 2, wherein raw water to constitute the water to be treated is charged at an initial stage of the denitrification treatment and filtration of the water to be treated by the membrane module is stopped.

4. An apparatus of membrane separation characterized in that in an apparatus of membrane separation for filtrating water to be treated by a membrane module arranged in a biological treatment tank and alternately carrying out a nitrification treatment and a denitrification treatment in the biological treatment tank, said apparatus of membrane separation comprising:
an aeration gas line for delivering an oxygen including gas to a position below the membrane module;
a first valve installed to the aeration gas line;
an inner tank gas line one end of which is connected to an upper space of the biological treatment tank and other end of which is connected to a downstream side portion of the first valve of the aeration gas line;
a second valve installed to the inner tank gas line; and
control means,for alternately constituting an aerobic atmosphere and an anaerobic atmosphere in the biological treatment tank by detecting a dissolved oxygen concentration in the water to be treated or an oxygen concentration in the inner tank gas and controlling to open or close the fist valve and second valve in accordance with the oxygen concentration.
